# EUROPEAN PATENT APPLICATION

(11) **EP 4 787 614 A1**
(43) Date of publication of application: **05.08.2026**
(21) Application number: 24871548.4
(22) Date of filing: 09.08.2024
(51) Int. Cl.: H01M 50/591, H01M 10/052, H01M 10/0587, H01M 50/531, H01M 50/586, H01M 50/538

(54) **SECONDARY BATTERY**

(30) Priority: 29.09.2023 JP 2023169264
(71) Applicant: Panasonic Intellectual Property Management Co., Ltd., Kadoma-shi, Osaka 571-0057 (JP)
(72) Inventor: NAMBUYA, Shunsuke, Osaka 571-0057 (JP)
(74) Representative: Eisenführ Speiser
(86) International application number: PCT/JP2024/028816
(87) International publication number: WO 2025/069746

(57) **Abstract**

Provided is a secondary battery capable of suppressing the occurrence of wrinkles and cracks in protective layers.

The secondary battery is characterized in that: a positive electrode includes a positive electrode core material and a positive electrode mixture layer disposed on the positive electrode core material; a positive electrode core material exposed part where the positive electrode mixture layer is not disposed is provided at one-side end portion of the positive electrode core material; protective layers containing a water-insoluble polymer and an inorganic filler are disposed on the positive electrode core material exposed part; the protective layers include a first protective layer disposed in a region, in the positive electrode core material exposed part, that is opposite to a negative electrode with a separator interposed therebetween, and include a second protective layer disposed in a region, in the positive electrode core material exposed part, that is located farther from the positive electrode mixture layer as compared to the region where the first protective layer is disposed; the mass ratio of the inorganic filler in the first protective layer is greater than the mass ratio of the inorganic filler in the second protective layer; and the mass ratio of the water-insoluble polymer in the second protective layer is greater than the mass ratio of the water-insoluble polymer in the first protective layer.

## Description

### TECHNICAL FIELD

The present disclosure relates to a technique of a secondary battery.

### BACKGROUND

A secondary battery includes, for example, a winding-type electrode assembly in which a separator is disposed between a positive electrode in which a positive electrode mixture layer is disposed on a positive electrode core material and a negative electrode in which a negative electrode mixture layer is disposed on a negative electrode core material, the positive electrode and the negative electrode are insulated from each other by the separator, and the positive electrode, the negative electrode, and the separator are wound, or a stacking-type electrode assembly in which a separator is disposed between a positive electrode and a negative electrode, and the positive electrode and the negative electrode are insulated from each other by the separator, and the positive electrode, the negative electrode, the separator are stacked.

In the secondary battery represented by a lithium ion secondary battery, the negative electrode mixture layer is designed to be larger than the positive electrode mixture layer in order to allow a negative electrode active material to smoothly absorb lithium ions released from a positive electrode active material during charging. That is, in secondary battery, there are quite a few structures in each of which an exposed portion of the positive electrode core material on which the positive electrode mixture layer is not disposed faces the negative electrode with the separator interposed therebetween.

In the case of the structure in which the exposed portion of the positive electrode core material on which the positive electrode mixture layer is not disposed faces the negative electrode with the separator interposed therebetween, when a part of the negative electrode facing the exposed portion of the positive electrode core material, the negative electrode active material peeled off from the negative electrode, and the like break through the separator due to dropping, vibration, or the like, and the negative electrode and the exposed portion of the positive electrode core material come into contact with each other, the secondary battery may generate heat due to an internal short circuit.

For example, Patent Literatures 1 to 4 each discloses a technique for suppressing occurrence of an internal short circuit of a secondary battery by providing a protective layer on an exposed portion of a positive electrode core material facing a negative electrode with a separator interposed therebetween.

### CITATION LIST

### PATENT LITERATURES

Patent Literature 1: JP 2007-95656 A
Patent Literature 2: JP 2007-103356 A
Patent Literature 3: JP 2012-234822 A
Patent Literature 4: JP 2021-184397 A

### SUMMARY

However, since a protective layer in the related art has low flexibility and is hard, for example, wrinkles and cracks may occur in the protective layer in a process of manufacturing a battery after formation of the protective layer, and insulating properties of the protective layer may be deteriorated.

Therefore, an object of the present disclosure is to provide a secondary battery capable of suppressing occurrence of wrinkles and cracks in a protective layer.

A secondary battery according to one aspect of the present disclosure is characterized by including an electrode assembly having a positive electrode, a negative electrode, and a separator disposed between the positive electrode and the negative electrode, wherein the positive electrode includes a positive electrode core material and a positive electrode mixture layer disposed on the positive electrode core material, an exposed portion where the positive electrode mixture layer is not disposed is provided at a one-side end of the positive electrode core material, a protective layer containing a water-insoluble polymer and an inorganic filler is disposed on the exposed portion, the protective layer has a first protective layer disposed in a region of the exposed portion, the region facing the negative electrode with the separator interposed therebetween, and a second protective layer disposed in a region of the exposed portion, the region being located farther from the positive electrode mixture layer than the region where the first protective layer is disposed, and a mass ratio of the inorganic filler in the first protective layer is larger than a mass ratio of the inorganic filler in the second protective layer, and a mass ratio of the water-insoluble polymer in the second protective layer is larger than a mass ratio of the water-insoluble polymer in the first protective layer.

Therefore, according to the one aspect of the present disclosure, it is possible to provide a secondary battery capable of suppressing occurrence of wrinkles and cracks in a protective layer.

### BRIEF DESCRIPTION OF DRAWINGS

FIG. 1 is a cross-sectional view illustrating one example of a constitution of a secondary battery according to an embodiment.
FIG. 2 is a partially enlarged cross-sectional view of an electrode assembly constituting the secondary battery according to the present embodiment.
FIG. 3 is a schematic plan view illustrating a positive electrode before winding.
FIG. 4 is a schematic cross-sectional view of the positive electrode taken along line A-A in FIG. 3.

### DESCRIPTION OF EMBODIMENTS

The drawings referred to in the following description of an embodiment are schematically illustrated, and dimensional ratios and the like of components drawn in the drawings may be different from real ones.

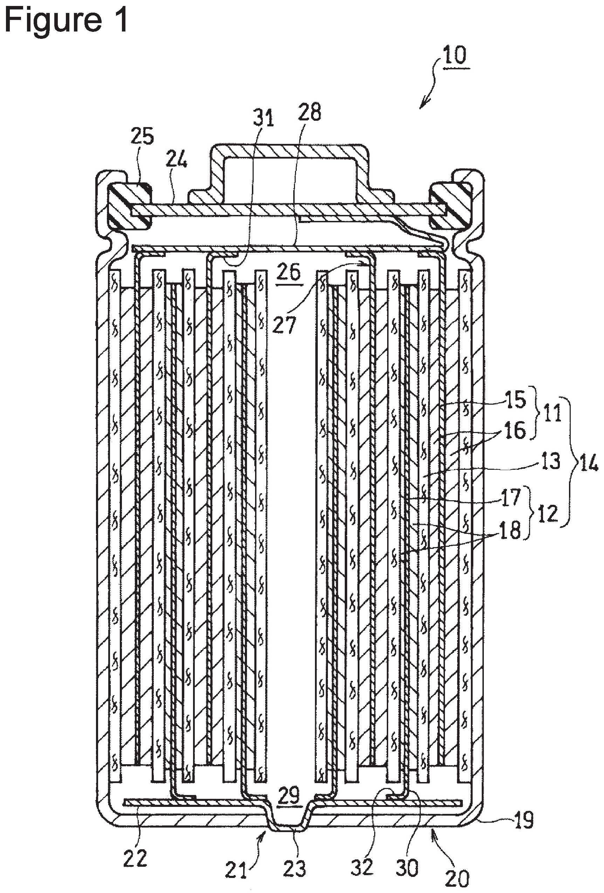

FIG. 1 is a cross-sectional view illustrating one example of a constitution of a secondary battery according to the embodiment. A secondary battery 10 illustrated in FIG. 1 includes an electrode assembly 14 having a positive electrode 11, a negative electrode 12, and a separator 13 disposed between the positive electrode 11 and the negative electrode 12. The electrode assembly 14 is a winding-type electrode assembly formed by winding the positive electrode 11 and the negative electrode 12 with the separator 13 interposed therebetween. Note that in the present embodiment, the electrode assembly is not limited to the winding-type electrode assembly, and may be a stacking-type electrode assembly in which a separator is disposed between a positive electrode and a negative electrode and these are stacked.

The positive electrode 11 includes a positive electrode core material 15 and positive electrode mixture layers 16 formed on both surfaces of the positive electrode core material 15. In addition, a positive-electrode core-material exposed portion 27 where the positive electrode mixture layers 16 are not disposed is formed at a one-side end of the positive electrode core material 15 on a side of one end 26 in a winding axis direction of the electrode assembly 14. A protective layer (not illustrated in FIG. 1) to be described later is disposed on the positive-electrode core-material exposed portion 27.

The negative electrode 12 includes a negative electrode core material 17 and negative electrode mixture layers 18 formed on both surfaces of the negative electrode core material 17. A negative-electrode core-material exposed portion 30 where the negative electrode mixture layers 18 are not disposed is formed at a one-side end of the negative electrode core material 17 on a side of another end 29 in the winding axis direction of the electrode assembly 14.

In addition, the secondary battery 10 includes a battery case 19, a negative-electrode current collector plate 22, a sealing plate 24, an insulating gasket 25, and a positive electrode current collector plate 28. The electrode assembly 14 is housed in the battery case 19 together with an electrolyte (not illustrated). The battery case 19 is a substantially cylindrical member having one end closed by a bottom 20 and another end opened. The bottom 20 includes a through hole 21 at a center. The through hole 21 is sealed by a projection 23 of the negative-electrode current collector plate 22, and an edge of the through hole 21 and a surface of the projection 23 are joined to each other by seam welding or the like. The projection 23 of the negative-electrode current collector plate 22 is also used as a negative electrode terminal. Another end of the battery case 19 is sealed by the sealing plate 24 and the insulating gasket 25 attached to a peripheral edge of the sealing plate 24.

The positive-electrode core-material exposed portion 27 is electrically connected to the sealing plate 24 also used as the positive electrode terminal via the positive-electrode current collector plate 28 disposed on the side of the one end 26 in the winding axis direction of the electrode assembly 14 inside the battery case 19. On the other hand, the negative-electrode core-material exposed portion 30 is electrically connected to the negative-electrode current collector plate 22 disposed on the side of the other end 29 in the winding axis direction of the electrode assembly 14 inside the battery case 19.

The positive-electrode core-material exposed portion 27 is bent toward a center side of the electrode assembly 14, and a distal end 31 of the bent positive-electrode core-material exposed portion 27 is joined to the positive-electrode current collector plate 28. Note that when the positive-electrode core-material exposed portion 27 is bent toward the center side of the electrode assembly 14, a part of the distal end 31 of the positive-electrode core-material exposed portion 27 on an outer circumferential surface side of the positive electrode core material 15, which is a winding outer circumferential side, becomes a joint portion with the positive-electrode current collector plate 28. On the other hand, the distal end 31 of the positive-electrode core-material exposed portion 27 on an inner circumferential surface side of the positive electrode core material 15, which is a winding inner circumferential side, faces the one end 26 in the winding axis direction of the electrode assembly 14. Similarly, the negative-electrode core-material exposed portion 30 is bent toward the center side of the electrode assembly 14, and a distal end 32 of the bent negative-electrode core-material exposed portion 30 is joined to the negative-electrode current collector plate 22. As described above, the secondary battery 10 illustrated in FIG. 1 has a so-called tabless structure in which a current is directly collected from the positive electrode core material 15 and the negative electrode core material 17. However, the secondary battery 10 of the present embodiment is not limited to the tabless structure, and may have, for example, a structure in which a lead is joined to the positive electrode core material 15 or the negative electrode core material 17 and a current is collected via the lead. Note that in the tabless structure, the distal end of the positive-electrode core-material exposed portion 27 may be joined to the positive-electrode current collector plate 28 and the distal end of the negative-electrode core-material exposed portion 30 may be joined to the negative-electrode current collector plate 22 without bending the positive-electrode core-material exposed portion 27 and the negative-electrode core-material exposed portion 30.

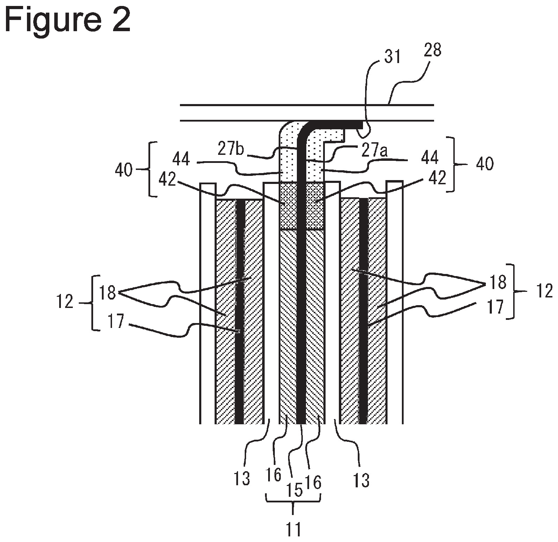

FIG. 2 is a partially enlarged cross-sectional view of the electrode assembly constituting the secondary battery according to the present embodiment. As illustrated in FIG. 2, the positive-electrode core-material exposed portion 27 disposed at the one-side end of the positive electrode core material 15 has a positive-electrode core-material exposed portion 27a on one surface side of the positive electrode core material 15 and a positive-electrode core-material exposed portion 27b on another surface side of the positive electrode core material 15. Hereinafter, one surface of the positive electrode core material 15 is defined as an inner circumferential surface of the positive electrode core material 15, which is the winding inner circumferential side, and the positive-electrode core-material exposed portion 27a on one surface side of the positive electrode core material 15 is referred to as the positive-electrode core-material exposed portion 27a on the inner circumferential surface side. In addition, another surface of the positive electrode core material 15 is defined as an outer circumferential surface of the positive electrode core material 15, which is the winding outer circumferential side, and the positive-electrode core-material exposed portion 27b on the other surface side of the positive electrode core material 15 is referred to as the positive-electrode core-material exposed portion 27b on the outer circumferential surface side. Note that the inner circumferential surface of the positive electrode core material 15 is a surface of the positive electrode core material 15 located on an inner side in a radial direction of the wound positive electrode 11 when the positive electrode 11 is wound, and the outer circumferential surface of the positive electrode core material 15 is a surface of the positive electrode core material 15 located on an outer side in the radial direction of the wound positive electrode 11.

As illustrated in FIG. 2, a protective layer 40 are disposed on each of the positive-electrode core-material exposed portion 27a on the inner circumferential surface side and the positive-electrode core-material exposed portion 27b on the outer circumferential surface side. The protective layer 40 contains a water-insoluble polymer and an inorganic filler, and has a first protective layer 42 and a second protective layer 44. A volume resistivity (a volume resistivity of each of the first protective layer 42 and the second protective layer 44) of the protective layer 40 is, for example, preferably greater than or equal to 10⁷ Ω·cm, and more preferably greater than or equal to 10⁹ Ω·cm from the viewpoint of suppressing occurrence of an internal short circuit of the battery.

The first protective layer 42 is disposed in a region of the positive-electrode core-material exposed portions (27a, 27b) that faces the negative electrode 12 with the separator 13 interposed therebetween. In addition, the second protective layer 44 is disposed side by side with the first protective layer 42 in a region located farther from the positive electrode mixture layers 16 than the region where the first protective layer 42 is disposed in the positive-electrode core-material exposed portions (27a, 27b). The first protective layer 42 and the second protective layer 44 are preferably adjacent to each other, but may be disposed with a gap. A mass ratio of the inorganic filler in the first protective layer 42 is larger than a mass ratio of the inorganic filler in second protective layer 44, and a mass ratio of the water-insoluble polymer in the second protective layer 44 is larger than a mass ratio of the water-insoluble polymer in the first protective layer 42.

In the related art, a protective layer has a hard single layer structure containing a large amount of inorganic filler in order to ensure high insulating properties. Here, in a process of manufacturing the secondary battery, the positive electrode mixture layer and the protective layer are rolled by a rolling roller or the like, but due to this rolling, wrinkles may be generated in the protective layer constituted of a hard single layer, which causes a decrease in insulating properties of the protective layer. However, in the present embodiment, since the second protective layer 44 having a higher flexibility than that of the first protective layer 42 due to the decreased ratio of the inorganic filler and the increased ratio of the water-insoluble polymer is provided outside the first protective layer 42, a stress applied to the first protective layer 42 at the time of rolling can be alleviated by the second protective layer 44. As a result, it is possible to suppress the occurrence of wrinkles in the protective layer 40 at the time of rolling. In addition, the positive-electrode core-material exposed portion 27 may be bent in order to connect the positive-electrode core-material exposed portion 27 to the positive-electrode current collector plate 28, but when a bending position is in the protective layer 40, in the related art, a crack may occur in the protective layer, which causes a decrease in insulating properties of the protective layer. On the other hand, in the present embodiment, for example, when the bending position is in the second protective layer 44 having a high flexibility, it is possible to suppress the occurrence of cracks in the protective layer 40. Note that by setting the bending position in the second protective layer 44, the second protective layer 44 remains at the distal end 31 of the bent positive-electrode core-material exposed portion 27, so that contact of the surface of the distal end portion 31 facing the one end 26 of the electrode assembly 14 in the winding axis direction can be protected by the second protective layer 44. For example, there is a case where the negative electrode 12 protrudes from the one end 26 of the electrode assembly 14 and comes into contact with the distal end 31 due to charging and discharging of the secondary battery 10, but there is a case where the contact between the negative electrode 12 and the distal end 31 can be protected by the second protective layer 44 by setting the bending position in the second protective layer 44 as described above.

Examples of the inorganic filler contained in the protective layer 40 include oxides such as alumina, silica, zirconia, titania, magnesia, ceria, yttria, zinc oxide, iron oxide, barium titanium oxide, and alumina-silica composite oxide, nitrides such as silicon nitride, titanium nitride, boron nitride, and aluminum nitride, hardly soluble ion crystals such as calcium fluoride, barium fluoride, and barium sulfate, covalent crystals such as silicon and diamond, silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, boehmite, apatite, mullite, spinel, olivine, and the like, and compounds containing at least one thereof. In addition, the inorganic filler may be particles having electrical insulation properties by surface-treating surfaces of conductive particles of an oxide such as SnO₂ or tin-indium oxide (ITO), a carbonaceous material such as carbon black or graphite, or the like with a material having electrical insulating properties (for example, the above-described materials of the inorganic filler).

The water-insoluble polymer contained in the protective layer 40 is preferably dissolved, for example, in an amount of less than 1 part by mass with respect to 100 parts by mass of water at 20°C, and examples thereof include a fluorine-containing polymer such as polyvinylidene fluoride (PVDF) or a copolymer of vinylidene fluoride and hexafluoropropylene, a copolymer of ethylene and vinyl alcohol, polyacrylonitrile, polyphosphazene, polysiloxane, polyvinyl acetate, polymethyl methacrylate, polystyrene, polycarbonate, polyamide, polyimide, polyamideimide, a crosslinked polymer of cellulose and chitosan pyrrolidone carboxylate, and a derivative of chitin or chitosan. Examples of the derivative of chitosan include a polymer compound obtained by glycerylating chitosan, a crosslinked product of chitosan, and the like. Among them, for example, from the viewpoint of electrochemical stability and the like, the water-insoluble polymer preferably contains a fluorine-containing polymer, and particularly preferably contains polyvinylidene fluoride (PVDF).

A mass ratio of the water-insoluble polymer in the first protective layer 42 is preferably from greater than or equal to 2% by mass, and less than or equal to 30% by mass, more preferably greater than or equal to 5% by mass and less than or equal to 25% by mass. In addition, a mass ratio of the water-insoluble polymer in the second protective layer 44 is preferably from greater than or equal to 50% by mass, and less than or equal to 100% by mass, more preferably greater than or equal to 75% by mass and less than or equal to 100% by mass. When the mass ratio of the water-insoluble polymer satisfies the above range, the insulating properties of the first protective layer 42 may be further improved, and the flexibility of the second protective layer 44 may be further improved. As a result, an internal short circuit due to contact between the negative electrode 12 and the positive-electrode core-material exposed portion 27 may be more unlikely to occur, or the occurrence of wrinkles and cracks of the protective layer 40 due to the process of manufacturing the battery may be further suppressed. Note that the first protective layer 42 and the second protective layer 44 may contain components other than the water-insoluble polymer and the inorganic filler.

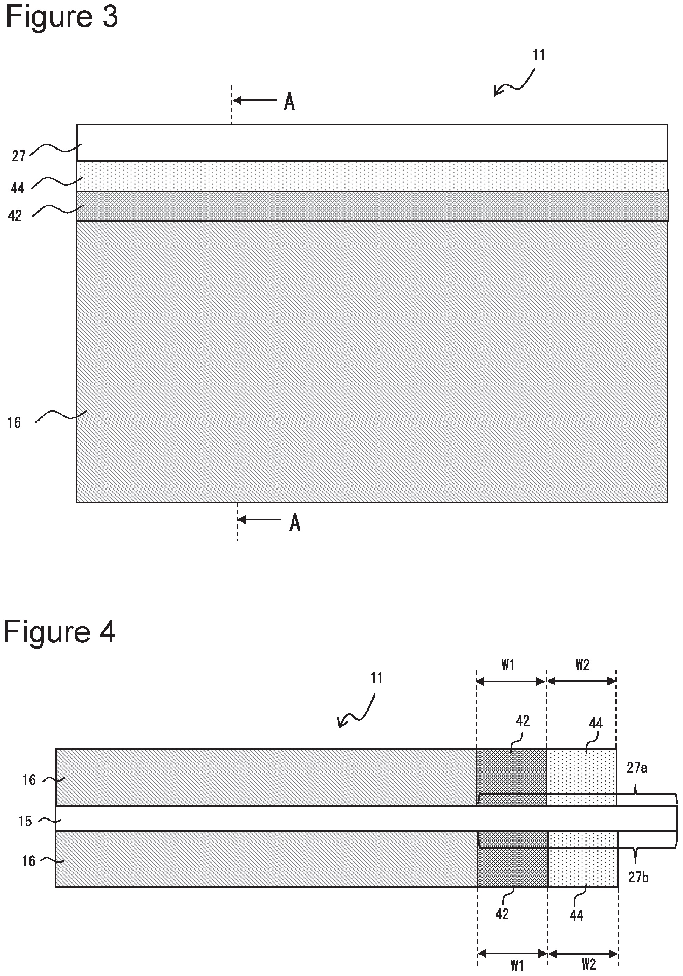

FIG. 3 is a schematic plan view illustrating the positive electrode before winding. FIG. 4 is a schematic cross-sectional view of the positive electrode taken along line A-A in FIG. 3. Thicknesses of the first protective layer 42 and the second protective layer 44 are preferably greater than or equal to 5 µm and less than or equal to 50 µm, and more preferably greater than or equal to 10 µm and less than or equal to 40 µm from the viewpoint of insulating properties, flexibility, and the like. In addition, a width (W1) of the first protective layer 42 and a width (W2) of the second protective layer 44 are each preferably greater than or equal to 2 mm and more preferably greater than or equal to 2 mm and less than or equal to 5 mm from the viewpoint of making an internal short circuit due to the contact between the negative electrode 12 and the positive-electrode core-material exposed portion 27 (27a, 27b) more difficult to occur. Note that the width (W1) of the first protective layer 42 and the width (W2) of the second protective layer 44 are lengths of the respective layers in a direction in which the first protective layer 42 and the second protective layer 44 are arranged.

When the positive-electrode core-material exposed portion 27 is bent in order to join the positive-electrode core-material exposed portion 27 to the positive-electrode current collector plate 28, it is preferable that the positive-electrode core-material exposed portion 27 is bent between the first protective layer 42 and the second protective layer 44, and the bent distal end 31 is joined to the positive-electrode current collector plate 28. When the first protective layer 42 and the second protective layer 44 are adjacent to each other, it is preferable to bend the first protective layer 42 and the second protective layer 44 at a boundary thereof. By setting a portion (or the boundary) between the first protective layer 42 and the second protective layer 44 as a bending position, the positive-electrode core-material exposed portion 27 can be easily bent, and the occurrence of cracks in the protective layer 40 can be further suppressed. In addition, since the second protective layer 44 remains at the distal end 31 of the positive-electrode core-material exposed portion 27, for example, even if there is a case where the negative electrode 12 protrudes from the one end 26 of the electrode assembly 14 due to charging and discharging of the secondary battery 10, the contact between the negative electrode 12 and the distal end 31 may be able to be protected by the second protective layer 44.

In the case of the winding-type electrode assembly 14, a ratio (B/A) of a total width (B) of the first protective layer 42 and the second protective layer 44 disposed on the positive-electrode core-material exposed portion 27b on the outer circumferential surface side to a total width (A) of the first protective layer 42 and the second protective layer 44 disposed on the positive-electrode core-material exposed portion 27a on the inner circumferential surface side is preferably greater than or equal to 0.3 and less than or equal to 0.6. By setting B/A to the above range, a wide space where the protective layer 40 is not disposed can be secured in the positive-electrode core-material exposed portion 27b on the outer circumferential surface side, so that the space and the positive-electrode current collector plate 28 can be easily joined to each other, and a joining strength and electron conductivity between the positive electrode 11 and the positive-electrode current collector plate 28 can be enhanced. Note that in a case where B/A satisfies the above-mentioned range, when the positive-electrode core-material exposed portion 27 is bent toward the center side of the electrode assembly 14, the positive-electrode core-material exposed portion 27 is preferably bent at a portion (or the boundary) between the first protective layer 42 and the second protective layer 44 disposed on the positive-electrode core-material exposed portion 27a on the inner circumferential surface side. As a result, the occurrence of cracks in the protective layer 40 disposed in the positive-electrode core-material exposed portion 27a on the inner circumferential surface side can be suppressed, so that the occurrence of an internal short circuit due to contact with the negative electrode 12 can be further suppressed. On the other hand, on the side of the positive-electrode core-material exposed portion 27b on the outer circumferential surface side, an arbitrary portion of the second protective layer 44 may be at the bending position, but since the second protective layer 44 is flexible as described above, the occurrence of cracks in the protective layer 40 due to the bending is minimized.

Hereinafter, materials and the like will be described that are used for the positive electrode 11, the negative electrode 12, the separator 13, and the electrolyte.

### [Positive Electrode]

For the positive electrode core material 15, a foil of a metal such as aluminum or an aluminum alloy that is stable in a potential range of the positive electrode 11, a film in which the metal is disposed on a surface layer, or the like can be used. The positive electrode mixture layer 16 includes, for example, a positive electrode active material, a binder, and a conductive agent. Since the protective layer 40 is as described above, the description thereof will be omitted.

Examples of the positive electrode active material include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used alone or in combination of two or more thereof. From the viewpoint that a high capacity of the secondary battery 10 can be achieved, it is preferable that the positive electrode active material contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3).

Examples of the conductive agent include carbon-based particles such as carbon black (CB), acetylene black (AB), Ketjenblack, and graphite. Among them, one type may be used alone, or two or more types may be used in combination.

Examples of the binder include fluorine-based resins such as polytetrafluoroethylene (PTFE) and polyvinylidene fluoride (PVdF), polyacrylonitrile (PAN), polyimide-based resins, acrylic resins, polyolefin-based resins, carboxymethylcellulose (CMC) and salts thereof (such as CMC-Na, CMC-K, CMC-NH₄, and partially neutralized salts), and polyethylene oxide (PEO). Among them, one type may be used alone, or two or more types may be used in combination.

One example of a method for manufacturing the positive electrode 11 will be described. First, a positive electrode mixture layer slurry containing the positive electrode active material, the binder, and the conductive agent is prepared. In addition, a first protective layer slurry and a second protective layer slurry containing the water-insoluble polymer and the inorganic filler are prepared. A mass ratio of the inorganic filler in the first protective layer slurry is larger than a mass ratio of the inorganic filler in second protective layer slurry, and a mass ratio of the water-insoluble polymer in the second protective layer slurry is larger than a mass ratio of the water-insoluble polymer in the first protective layer slurry. Then, the positive electrode mixture layer slurry is applied onto the positive electrode core material 15 (one side or both sides) excluding the positive-electrode core-material exposed portion 27 at the one-side end of the positive electrode core material 15, and the first protective layer slurry and the second protective layer slurry are applied in parallel onto the positive-electrode core-material exposed portion 27 of a non-applied portion. An order of application of these slurries is not particularly limited, and for example, these slurries may be applied simultaneously, or the first protective layer slurry and the second protective layer slurry may be applied after the positive electrode mixture layer slurry is applied. A coating film of the positive electrode mixture layer 16 and a coating film of the protective layer 40 coated on the positive electrode core material 15 are dried, and then rolled by a rolling roller or the like. In this manner, the positive electrode 11 of the present embodiment can be prepared. As described above, in the present embodiment, since the second protective layer 44 having a higher flexibility than that of the first protective layer 42 due to the decreased ratio of the inorganic filler and the increased ratio of the water-insoluble polymer is provided outside the first protective layer 42, a stress applied to the first protective layer 42 at the time of rolling can be alleviated by the second protective layer 44, and occurrence of wrinkles in the protective layer 40 at the time of rolling can be suppressed. In addition, in the related art, when a slurry containing a large amount of inorganic filler is applied onto the positive electrode core material 15, an end of the coating film drips, and a thickness of the end of the formed protective layer 40 becomes thin, so that the insulating properties of an end of the protective layer 40 may not be sufficiently secured. However, since the second protective layer slurry has a large ratio of the water-insoluble polymer and has a high viscosity, dripping at an end of the coating film formed of the first protective layer 42 can be suppressed by applying the second protective layer slurry to an outside of the coating film formed of the first protective layer slurry to prepare the coating film of the second protective layer slurry as in the present embodiment. Further, an end of the coating film formed of the second protective layer slurry having a high viscosity is unlikely to drip. Therefore, since the thickness of the obtained end of the protective layer 40 (the end of the first protective layer 42 and the end of the second protective layer 44) is unlikely to be thin, insulating properties can be sufficiently secured.

### [Negative Electrode]

For the negative electrode core material 17, a foil of a metal such as copper that is stable in a potential range of the negative electrode 12, a film in which the metal is disposed on a surface layer, or the like can be used. The negative electrode mixture layer 18 contains, for example, a negative electrode active material, a binder, and the like.

Examples of the negative electrode active material include metal lithium, lithium alloys such as a lithium-aluminum alloy, a lithium-lead alloy, a lithium-silicon alloy, and a lithium-tin alloy, carbon materials such as graphite, coke, and organic substance fired bodies, and metal oxides such as SnO₂, SnO, and TiO₂. These negative electrode active materials may be used alone or in combination of two or more thereof.

Examples of the binder include, as in the case of the positive electrode 11, fluorine-based resins such as polytetrafluoroethylene (PTFE) and polyvinylidene fluoride (PVdF), polyacrylonitrile (PAN), a polyimide-based resin, an acryl-based resin, a polyolefin-based resin, carboxymethyl cellulose (CMC) and a salt thereof (CMC-Na, CMC-K, CMC-NH₄, etc., and partially neutralized salts), and polyethylene oxide (PEO). Among them, one type may be used alone, or two or more types may be used in combination.

One example of a method for manufacturing the negative electrode 12 will be described. First, a negative electrode mixture layer slurry containing the negative electrode active material, the binder, and the like is applied onto the negative electrode core material 17 (one surface or both surfaces) excluding the exposed portion of the one-side end of the negative electrode core material 17. The negative electrode mixture layer slurry is applied, and then a coating film of the negative electrode mixture layer 18 is dried and rolled by a rolling roller or the like. In this manner, the negative electrode 12 can be prepared.

### [Separator]

For the separator 13, for example, a porous sheet or the like, which has ion permeation properties and insulating properties, is used. Specific examples of the porous sheet include fine porous thin films, woven fabrics, and nonwoven fabrics. As a material of the separator 13, olefin-based resins such as polyethylene and polypropylene, cellulose, and the like are preferable. The separator 13 may be a laminate having a cellulose fiber layer and a thermoplastic resin fiber layer of an olefin-based resin or the like. In addition, a multi-layer separator including a polyethylene layer and a polypropylene layer may be used, and the separator 13 whose surface is coated with a material such as an aramid-based resin or ceramic may be used.

### [Electrolyte]

The electrolyte has, for example, ion conductivity (for example, lithium ion conductivity). The electrolyte may be a liquid electrolyte (an electrolytic solution) or a solid electrolyte.

The liquid electrolyte (the electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. For example, the polymer electrolyte contains a lithium salt and a matrix polymer or contains a non-aqueous solvent, a lithium salt, and a matrix polymer. As the matrix polymer, for example, a polymer material that absorbs the non-aqueous solvent and gelates is used. Examples of the polymer material include a fluororesin, an acrylic resin, and a polyether resin. As the inorganic solid electrolyte, for example, materials known in the technical field of all-solid-state lithium ion secondary batteries or the like (for example, oxide-based solid electrolytes, sulfide-based solid electrolytes, halogen-based solid electrolytes, and the like) can be used. Note that the electrolytes described above as examples are non-aqueous electrolytes but the electrolyte is not limited to a non-aqueous electrolyte, and may be an aqueous electrolyte.

The present disclosure is further described by the following embodiments.

### Constitution 1:

A secondary battery including an electrode assembly having a positive electrode, a negative electrode, and a separator disposed between the positive electrode and the negative electrode, wherein
the positive electrode includes a positive electrode core material and a positive electrode mixture layer disposed on the positive electrode core material,
an exposed portion where the positive electrode mixture layer is not disposed is provided at a one-side end of the positive electrode core material,
a protective layer containing a water-insoluble polymer and an inorganic filler is disposed on the exposed portion,
the protective layer has a first protective layer disposed in a region of the exposed portion, the region facing the negative electrode with the separator interposed therebetween, and a second protective layer disposed in a region of the exposed portion, the region being located farther from the positive electrode mixture layer than the region where the first protective layer is disposed, and
a mass ratio of the inorganic filler in the first protective layer is larger than a mass ratio of the inorganic filler in the second protective layer, and a mass ratio of the water-insoluble polymer in the second protective layer is larger than a mass ratio of the water-insoluble polymer in the first protective layer.

### Constitution 2:

The secondary battery according to constitution 1, wherein the mass ratio of the water-insoluble polymer in the first protective layer is greater than or equal to 2% by mass and less than or equal to 30% by mass, and the mass ratio of the water-insoluble polymer in the second protective layer is greater than or equal to 50% by mass and less than or equal to 100% by mass.

### Constitution 3:

The secondary battery according to constitution 1 or constitution 2, wherein a thickness of each of the first protective layer and the second protective layer is greater than or equal to 5 µm and less than or equal to 50 µm.

### Constitution 4:

The secondary battery according to any one of constitutions 1 to 3, wherein a width of each of the first protective layer and the second protective layer is greater than or equal to 2 mm.

### Constitution 5:

The secondary battery according to any one of constitutions 1 to 4, wherein the exposed portion is bent between the first protective layer and the second protective layer, and a bent distal end is connected to a positive-electrode current collector plate.

### Constitution 6:

The secondary battery according to any one of constitutions 1 to 5, wherein
the electrode assembly is a winding-type electrode assembly in which the positive electrode and the negative electrode are wound with the separator interposed therebetween, and
a ratio (A/B) of a total width (B) of the first protective layer and the second protective layer disposed on the exposed portion provided on an outer circumferential surface side of the positive electrode core material, the outer circumferential surface side being a winding outer circumferential side, to a total width (A) of the first protective layer and the second protective layer disposed on the exposed portion provided on an inner circumferential surface side of the positive electrode core material, the inner circumferential surface side being a winding inner circumferential side, is greater than or equal to 0.3 and less than or equal to 0.6.

### REFERENCE SIGNS LIST

- 10: Secondary battery
- 11: Positive electrode
- 12: Negative electrode
- 13: Separator
- 14: Electrode assembly
- 15: Positive electrode core material
- 16: Positive electrode mixture layer
- 17: Negative electrode core material
- 18: Negative electrode mixture layer
- 19: Battery case
- 20: Bottom
- 21: Through hole
- 22: Negative-electrode current collector plate
- 23: Projection
- 24: Sealing plate
- 25: Insulating gasket
- 26: One end
- 27, 27a, 27b: Positive-electrode core-material exposed portion
- 28: Positive-electrode current collector plate
- 29: Other end
- 30: Negative-electrode core-material exposed portion
- 31: Distal end
- 32: Distal end
- 40: Protective layer
- 42: First protective layer
- 44: Second protective layer

## Claims

1. A secondary battery comprising an electrode assembly having a positive electrode, a negative electrode, and a separator disposed between the positive electrode and the negative electrode, wherein
the positive electrode includes a positive electrode core material and a positive electrode mixture layer disposed on the positive electrode core material,
an exposed portion where the positive electrode mixture layer is not disposed is provided at a one-side end of the positive electrode core material,
a protective layer containing a water-insoluble polymer and an inorganic filler is disposed on the exposed portion,
the protective layer has a first protective layer disposed in a region of the exposed portion, the region facing the negative electrode with the separator interposed therebetween, and a second protective layer disposed in a region of the exposed portion, the region being located farther from the positive electrode mixture layer than the region where the first protective layer is disposed, and
a mass ratio of the inorganic filler in the first protective layer is larger than a mass ratio of the inorganic filler in the second protective layer, and a mass ratio of the water-insoluble polymer in the second protective layer is larger than a mass ratio of the water-insoluble polymer in the first protective layer.

2. The secondary battery according to claim 1, wherein the mass ratio of the water-insoluble polymer in the first protective layer is greater than or equal to 2% by mass and less than or equal to 30% by mass, and the mass ratio of the water-insoluble polymer in the second protective layer is greater than or equal to 50% by mass and less than or equal to 100% by mass.

3. The secondary battery according to claim 1 or claim 2, wherein a thickness of each of the first protective layer and the second protective layer is greater than or equal to 5 µm and less than or equal to 50 µm.

4. The secondary battery according to claim 1 or claim 2, wherein a width of each of the first protective layer and the second protective layer is greater than or equal to 2 mm.

5. The secondary battery according to claim 1 or claim 2, wherein the exposed portion is bent between the first protective layer and the second protective layer, and a bent distal end is connected to a positive-electrode current collector plate.

6. The secondary battery according to claim 1 or claim 2, wherein
the electrode assembly is a winding-type electrode assembly in which the positive electrode and the negative electrode are wound with the separator interposed therebetween, and
a ratio (A/B) of a total width (B) of the first protective layer and the second protective layer disposed on the exposed portion provided on an outer circumferential surface side of the positive electrode core material, the outer circumferential surface side being a winding outer circumferential side, to a total width (A) of the first protective layer and the second protective layer disposed on the exposed portion provided on an inner circumferential surface side of the positive electrode core material, the inner circumferential surface side being a winding inner circumferential side, is greater than or equal to 0.3 and less than or equal to 0.6.
